# EUROPÄISCHE PATENTSCHRIFT

(11) **EP 1 212 247 B1**
(45) Veröffentlichungstag und Bekanntmachung des Hinweises auf die Patenterteilung: **05.11.2003**
(21) Anmeldenummer: 00965772.7
(22) Anmeldetag: 16.08.2000
(51) Int. Cl.: B65F 7/00, B08B 9/08

(54) **WASCHFAHRZEUG FÜR ABFALLSAMMELBEHÄLTER**
CLEANING VEHICLE FOR WASTE COLLECTING BINS
VEHICULE DE NETTOYAGE POUR RECIPIENT DE COLLECTE DE DECHETS

(30) Priorität: 15.09.1999 DE 19944113
(43) Veröffentlichungstag der Anmeldung: 12.06.2002
(73) Patentinhaber: DTG GmbH Development & Technology, 52382 Niederzier (DE)
(72) Erfinder: FINKE, Torsten, 45359 Essen (DE); ROTTHÄUSER, Siegfried, 45133 Essen (DE); JOSTEN, Peter, 46244 Bottrop-Kirchhellen (DE)
(74) Vertreter: Schulte, Jörg, Dipl.-Ing.
(86) Internationale Anmeldenummer: DE0002807
(87) Internationale Veröffentlichungsnummer: WO01019706

(56) Entgegenhaltungen:
- EP-A- 0 278 848
- EP-A- 0 937 510
- GB-A- 2 283 409
- GB-A- 2 301 022

## Beschreibung

Die Erfindung betrifft ein Waschfahrzeug für Abfallsammelbehälter, insbesondere Bio-Tonnen, der mit einem Wasserbehälter mit vorgeordnetem Schmutzabscheider, einem Auffangraum mit Auffangwanne für das Schmutzwasser und einer die Bio-Tonnen in den Auffangraum schwenkende Hebe-Schwenk- und Senkeinrichtung ausgerüstet ist, wobei im Auffangraum eine Reinigungsanlage mit Sprühlanzen angeordnet ist, die Auffangwanne ein vorgeordnetes Grobsieb und eine als Tauchpumpe ausgebildete und über eine Versorgungsleitung mit dem Wasserbehälter verbundene Schmutzwasserpumpe aufweist und dem Wasserbehälter ein Filter vor- und eine als Hochdruckpumpe ausgebildete und die Sprühlanzen versorgende Pumpe zugeordnet ist.

Derartige Waschfahrzeuge sind beispielhaft aus der DE-PS 25 36 774 sowie der DE-PS 29 01 599 bekannt. Bei diesen bekannten sogenannten Mülltonnenwaschfahrzeugen werden die Mülltonnen über eine Hebe-Schwenk- und Senkeinrichtung von der Straße aufgenommen und dann so verschwenkt, dass sie über entsprechend angeordnete Sprühlanzen mit Wasser, Dampf, vor allen Dingen aber einer Reinigungsflüssigkeit abgereinigt werden können. Das abgereinigte Material wird in der Regel dem normalen Müll zugemischt oder aber in diesem gesammelt, um dann insgesamt entsorgt zu werden. Auch das zur Abreinigung gebrauchte sogenannte Schmutzwasser wird in einem Sammelraum aufgefangen und muss dann gesondert entsorgt werden, wobei besonders problematisch ist, dass dem Frischwasser entsprechende Chemikalien zugemischt worden sind. Von daher ist eine Sonderentsorgung zwingend notwendig. Schon beim Vergleich dieser beiden vorveröffentlichten Patentschriften ist erkennbar, dass für unterschiedliche Mülltonnen oder Abfallsammelbehälter unterschiedliche Hebe-Schwenk- und Senkeinrichtungen, aber auch Reinigungsanlagen erforderlich sind. Dies gilt auch für die sogenannte Vorrichtung zur Reinigung von Müllbehältern, die der DE-GM 94 20 894 entnommen werden kann. Hierbei ist die Reinigungs- oder Verstelleinrichtung so angeordnet und mit beweglichen Spritzköpfen versehen, dass das Schmutzwasser in einer Auffangwanne aufgefangen werden soll. Die aufgefangene Reinigungsflüssigkeit läuft in den Wechselbehälter zurück, wobei auch hier sowohl eine Aufheizung der Reinigungsflüssigkeit wie auch eine Vermischung mit Chemikalien vorgesehen ist, weshalb auch hier die weiter vorn beschriebenen Probleme bei der Entsorgung auftreten. Die Flüssigkeit muss aufgefangen, aufbewahrt und gesondert entsorgt werden. Schon von daher ist der Einsatzbereich derartiger Waschfahrzeuge bzw. der Reinigungseinrichtungen begrenzt, weil die Reinigungsflüssigkeit mengenmäßig in etwa der Schmutzwassermenge entspricht, sodass zwei getrennte große Tanks auf dem Fahrgestell vorgehalten werden müssen. Aus der GB-A-2 301 022 ist ein Reinigungsfahrzeug für Mülltonnen bekannt. Das Wässer wird im Kreislauf geführt und gereinigt. Da das Wasser nicht ausreichend mechanisch gesäubert werden kann, müssen chemische Reinigungsmittel eingesetzt werden. Zum Anheben der Mülltonnen sieht die EP-0 278 848-A1 eine mit Saugnäpfen ausgerüstete Vorrichtung vor. Sie kann nur bestimmte und leichte Tonnen anheben.

Der Erfindung liegt nun die Aufgabe zugrunde, ein für Abfallsammelbehälter, insbesondere Bio-Tonnen unterschiedlicher Abmessungen geeignetes Waschfahrzeug zu schaffen, das vom Versorgungsnetz weitgehend unabhängig und umweltfreundlich ohne chemische Reinigungsmittel arbeitet.

Die Aufgabe wird gemäß der Erfindung dadurch gelöst, dass der Schmutzabscheider als ein Edelstahldrahtgewebe aufweisender Feinfilter und im Wasserbehälter anzuordnender Einsatzkorb ausgebildet ist, und dass die Hebe-Schwenk- und Senkeinrichtung mit einem Sauggreifer ausgerüstet ist, der an eine Vakuumpumpe angeschlossen ist.

Bei einem derart ausgerüsteten Waschfahrzeug ist zunächst einmal durch die entsprechende Führung des Reinigungswassers die Möglichkeit gegeben, die einzelnen Bio-Tonnen oder sonstigen Abfallsammelbehälter mit Hochdruckwasser zu reinigen, sodass der Zusatz von Chemikalien nicht notwendig ist. Es erübrigt sich sogar das Aufwärmen der Reinigungsflüssigkeit, weil mit dem nötigen Druck über die Sprühlanzen über das Feinfilter erhaltenes Reinigungswasser in die Bio-Tonnen hineingesprüht werden kann. Dieses nun Festbestandteile enthaltende Wasser wird dann, wie bekannt, im Auffangraum mit Auffangwanne aufgefangen und über einen Schmutzabscheider geführt, sodass die nachgeordnete Tauchpumpe das vom Grobschmutz getrennte Wasser problemlos in den Wasserbehälter mit dem Feinsieb zurückpumpen kann. Um später dann das notwendige Hochdruckwasser erzeugen zu können, ist dem Wasserbehälter noch das Feinfilter zugeordnet. Damit ist zunächst einmal die Möglichkeit gegeben, das Reinigungswasser mehrfach zu benutzen, sodass ein derartiges Waschfahrzeug praktisch vom Versorgungsnetz unabhängig arbeitet, zumindestens aber einen Tag lang, um dann das Reinigungswasser auszutauschen. Weil Chemikalien nicht zugesetzt werden, kann dieses dann natürlich auch Schmutzbestandteile enthaltende Wasser in die normale Abwasserleitung gegeben werden, sodass gesonderte Kosten nicht entfallen. Das Feinfilter ist im Wasserbehälter untergebracht, sodass auf ein eigenes Filtergehäuse verzichtet werden kann. Im Wasserbehälter ist die Reinigungsflüssigkeit in einem geschlossenen Behälter, sodass selbst dann, wenn irgendwelche Keime mitgeführt werden sollten, diese niemanden beeinträchtigen können. Da im Übrigen auch die Reinigung der Bio-Tonnen innenseitig automatisch erfolgt, ist auch hier eine Beeinträchtigung der Müllwerker nicht zu befürchten. Bei Betätigung der Handpistolen halten sie einen ausreichenden Abstand ein, sodass auch hier eine Gefährdung nicht zu erkennen ist. Der Drahtkorb kann mit der Entleerung des Wasserbehälters bei entsprechendem Wassertausch ausgespült werden, sodass er anschließend sofort wieder einsatzfähig ist. Sollte sich aus irgendeinem Grunde zuviel an Feinstoff in dem Drahtkorb ansammeln, kann auch eine Abreinigung zwischendurch erfolgen. Weiter ist es mit dem erfindungsgemäßen Fahrzeug möglich, praktisch jede Art von Bio-Tonne bzw. Abfallsammelbehälter aufzunehmen, weil nicht die üblichen Greifer zum Einsatz kommen, sondern vielmehr eine Hebe-Schwenk- und Senkeinrichtung mit einem Sauggreifer. Dieser Sauggreifer saugt sich an der Außenwand der jeweiligen Tonne über die Vakuumpumpe fest, sodass ein Anheben unabhängig davon möglich ist, ob es sich um eine größere oder kleinere Tonne handelt, es muss nur eine entsprechende Angreiffläche vorhanden sein, die bei den üblichen größeren und kleineren Tonnen aber immer vorhanden ist.

Besonders vorteilhaft, da ohne gesonderten eigenen Antrieb arbeitend, ist eine Ausführung der vorliegenden Erfindung, bei der die Hochdruckpumpe über einen Nebenantrieb des Fahrmotors antreibbar und ihr ein Unloader Ventil nachgeordnet ist. Ein Rückströmen der Flüssigkeit in die Hochdruckpumpe ist nicht möglich, weil dies über das Unloader Ventil verhindert wird. Gleichzeitig ist aber die Möglichkeit gegeben, die Reinigungsflüssigkeit im Kreis zu führen, um so die Hochdruckpumpe im "Dauerbetrieb" führen zu können, wodurch ein fortwährendes Hochfahren der Hochdruckpumpe vermieden wird.

Nach einer zweckmäßigen Weiterbildung der Erfindung ist vorgesehen, dass zwei automatische Sprühlanzen und eine oder zwei Handpistolen vorgesehen sind, die alle unabhängig voneinander mit der Versorgungsleitung hinter dem Wasserbehälter verbunden und schaltbar ausgebildet sind. Die einzelnen Sprühlanzen können einzeln oder zusammen eingeschaltet werden, sodass entweder zwei kleine Tonnen nebeneinander oder ein entsprechend großer Aufnahmebehälter über beide Sprühlanzen gleichzeitig zu säubern sind. Mit den gesondert einschaltbaren Handpistolen kann problemlos eventuell noch an der Außenwandung der Tonnen anhaftender Schmutz ebenfalls mit abgespült und in den Auffangraum hineingespült werden. Eine vollständige Säuberung ist somit erreicht, wobei zweckmäßigerweise ein derartiges Waschfahrzeug hinter dem normalen Sammelfahrzeug her fährt und die Tonnen gleich reinigt.

Eine zweckmäßige Weiterbildung sieht vor, dass die Handpistolen je eine Düse aufweisen und manuell schaltbar ausgebildet sind. Die Handpistolen können somit von den Müllwerkern bei Bedarf aus ihrer Halterung gelöst und in Gang gesetzt werden, ohne dass es dazu erforderlich ist, eine gesonderte Pumpe einzuschalten. Die Sprühlanzen dagegen werden automatisch geschaltet, was bedeutet, dass mit dem Hochschwenken der Tonne oder des großen Behälters und Erreichen einer entsprechenden Position über entsprechende Schalter die Sprühlanzen automatisch mit ihrem Aussprühen der Reinigungsflüssigkeit beginnen und zwar für eine vorgegebene Mindestzeit. Sie können dann wieder abschalten und der Rückschwenkvorgang kann eingeleitet werden.

Um die verschiedenen zu reinigenden Flächen in den Behältern und Tonnen sicher säubern zu können ist vorgesehen, dass die Sprühlanzen mit je vier Düsen ausgerüstet sind, die kranzförmig angeordnet und über Wegeventile automatisch schaltbar sind. Auf die automatische Schaltung ist weiter vorn schon hingewiesen worden. Vorteilhaft dabei ist, dass die Müllwerker in diesen Prozess letztlich überhaupt nicht eingreifen müssen. Ein gleichmäßiges Abreinigen der Tonnen und Behälter ist so gewährleistet.

Praktisch alle zum Einsatz kommenden Tonnen und Behälter können mit ein und derselben Hebe-Schwenk- und Senkeinrichtung gehändelt werden, weil wie weiter vorn erwähnt ein Sauggreifer mit Vakuumpumpe für eine Festlegung an den jeweiligen Tonnen sorgt. Eine besonders zweckmäßige Ausführung sieht nun vor, dass der an eine elektrisch betriebene Vakuumpumpe angeschlossene Sauggreifer einen zwischen Ventil und Saugkörper des Sauggreifers angeordneten und den Saugkörper überwachenden und das Saugventil ggf. betätigenden Druckschalter aufweist. Der Druckschalter sorgt also dafür, dass nach Erfassen des jeweiligen Behälters oder der jeweiligen Tonne immer der notwendige Unterdruck vorhanden ist, um die Verbindung zwischen Sauggreifer und Behälter bzw. Tonne sicherzustellen. Erst wenn der Behälter bzw. die Tonne wieder abgestellt werden soll, öffnet das Ventil, und der Sauggreifer kann sich von der Tonne bzw. dem Behälter lösen, mit Öffnen des Ventils kann Luft von außen einströmen und der Lösevorgang kann schnell ablaufen.

Die Handhabung der Hebe-Schwenk- und Senkeinrichtung wird gemäß der Erfindung dadurch erleichtert und kann voll automatisiert werden, weil der Sauggreifer mit einem Anforderungskontakt ausgerüstet ist, über den die Vakuumpumpe und das Ventil schaltbar ausgeführt sind. Der Anforderungskontakt spricht sofort an, wenn der Sauggreifer den jeweiligen Behälter bzw. die Tonne berührt und einen entsprechenden geringen Abstand zum Rand des Sauggreifers erhält. Der Anforderungskontakt löst dann die Verbindung zur Vakuumpumpe aus, sodass die Tonne bzw. der Behälter automatisch erfasst und festgesaugt wird.

Eine besonders einfache und sicher arbeitende Ausführung ist die, bei der der Sauggreifer mit einem tonnenseitig offenen Mehrfaltenbalg versehen ist, in dessen Balgtiefsten ein als Näherungsschalter ausgerüsteter Anforderungskontakt positioniert ist. Näherungsschalter sind in der Industrie in den unterschiedlichsten Bereichen im Einsatz und haben sich bewährt. Sie sprechen an, sobald der jeweilige Gegenstand, also hier die Tonne oder der Behälter, in eine entsprechend geringe Entfernung zu ihnen gelangen. Automatisch wird dann über sie die Vakuumpumpe eingeschaltet.

Um nun zu vermeiden, dass erst bei einem relativ dichtem Kontakt zwischen Behälter bzw. Tonne und Näherungsschalter die Vakuumpumpe eingeschaltet wird, ist vorgesehen, dass dem Näherungsschalter eine Metallplatte in Richtung Balgaußenwand vorgeordnet ist, die im Ruhezustand über einen Abstandshalter im ansprechfreien Abstand zum Näherungsschalter gehalten ist. Die entsprechende Metallplatte sichert ein Ansprechen der Näherungsschalter auch dann, wenn Kunststofftonnen oder -behälter zum Einsatz kommen oder aus anderem von den Näherungsschaltern schlechter zu erkennendem Material bestehen. Gleichzeitig stellt sie aber auch sicher, dass schon bei einem größeren Abstand über die an den Näherungsschalter herangeschwenkte Metallplatte ein frühzeitiges Einschalten der Vakuumpumpe möglich wird. Der Abstandshalter selbst ist teleskopierbar oder sonstwie längenveränderlich, sodass beim automatischen Heranziehen der Tonne bzw. des Behälters eine Beschädigung des Näherungsschalters nicht eintreten kann.

Um nun einen zweckmäßigen und gleichzeitig den Näherungsschalter schützenden Abstandshalter vorzugeben, sieht die Erfindung vor, dass der Abstandshalter als Druckfeder ausgebildet ist, die am der Metallplatte gegenüberliegenden Ende an einem, den Anforderungskontakt umschließenden und abdichtenden Schutzmantel lösbar angeordnet ist. Sowohl die Druckfeder wie insbesondere auch der Näherungsschalter werden damit trocken gehalten, sodass eine bleibend sichere Ansprache gewährleistet ist. Der Abstandshalter als solcher, d. h. also die Druckfeder, wird gleichzeitig sicher geführt, sodass die Metallplatte sich auch gleichmäßig an den Näherungsschalter heranbewegt und in diesem den Schaltvorgang initiiert.

Eine weitere zweckmäßige Ausführung dieses Anforderungskontaktes ist die, bei der der Schutzmantel ebenfalls ein Faltenbalg ist, der an der Basis des Mehrfaltenbalges lösbar befestigt ist. Der Faltenbalg kann zweckmäßig festgelegt werden und bewegt sich mit der Druckfeder, sodass deren Bewegung nicht beeinträchtigt ist. Ein gleichmäßiger Bewegungsvorgang für die Metallplatte ist so sichergestellt. Die lösbare Befestigung gibt die Möglichkeit bei Bedarf eine auszuwechseln oder zu reparieren.

Sowohl einer günstigen Festlegung des Faltenbalges bzw. Schutzmantels wie auch des Näherungsschalters dient eine Ausbildung, nach der in der Basis des Mehrfaltenbalges eine Stufenbohrung für den Näherungsschalter vorgesehen ist, wobei die Innenbohrung einen in die Großbohrung vorspringenden Flansch aufweist, hinter den der Schutzmantel einspannbar ausgebildet ist. Damit gibt man dem Näherungsschalter einen sicheren und geschützten Sitz und kann gleichzeitig den Schutzmantel an der Basis einfach und zweckmäßig festlegen, in gewisser Weise einfach über den Flansch überstülpen.

Ein direkter Kontakt zwischen Metallplatte und Näherungsschalter wird dadurch vermieden, dass der Näherungsschalter geringfügig zurückversetzt in der Innenbohrung angeordnet ist.

Die einfache und lösbare Anordnung des Schutzmantels bzw. Faltenbalges erreicht man gemäß der Erfindung, indem der als Schutzmantel dienende Faltenbalg an beiden Enden eine Ringwulst aufweisend ausgebildet ist, wobei das der Metallplatte gegenüberliegende Ende eine mit einer die Druckfeder aufnehmenden Stützplatte korrespondierend geformt ist. Der entsprechende kleine Faltenbalg kann somit mit beiden Enden über die entsprechenden Teile gedrückt und sicher in entsprechenden Nuten bzw. hinter dem Flansch festgelegt werden. Gleichzeitig bietet die Stützplatte eine einfache und zweckmäßige Befestigung bzw. Festlegung der Druckfeder, die sich durch die Konstruktion bedingt gleichmäßig in Richtung Basis bewegt bzw. von dieser wieder wegbewegt, wenn der Kontakt mit dem Behälter aufgehoben wird.

Weiter vorn ist bereits erläutert worden, dass im Grobsieb angesammeltes Grobmaterial in regelmäßigen Abständen entsorgt werden kann und soll. Um hier die Umwelt zu schonen, sind seitlich am Fahrgestell Feststoffbehälter lösbar anmontiert und mit schwenkbarem Verschlussdeckel ausgerüstet. Die Müllwerker können somit das im Grobsieb aufgefangene Grobmaterial problemlos in die Feststoffbehälter füllen, um diese dann in großen Abständen und an geeigneter Stelle zu entsorgen. Dabei wird die Handhabung gemäß der Erfindung erleichtert, indem dem Fahrgestell seitlich ein Seitenheber für die Feststoffbehälter zugeordnet ist. Damit ist eine einfache und komfortable Handhabung erreicht, wobei die Behälter in entsprechender Höhe am Fahrzeug abgestellt werden. Die Behälter werden vom Seitenheber gelöst und mit nach hinten genommen. Auf ähnliche Weise können auch Ersatzsammelbehälter vorgehalten werden. Hierzu ist vorgesehen, dass dem Fahrgestell ein oder mehrere Ersatzsammelbehälter zugeordnet ? auf oder an einer dafür ausgerüsteten Stellfläche angeordnet sind.

Die Erfindung zeichnet sich insbesondere dadurch aus, dass ein Waschfahrzeug geschaffen ist, das erstmals die Möglichkeit bietet, umweltfreundlich und ergonomisch vorteilhaft insbesondere mit Bio-Müll befüllte Tonnen entweder direkt nach der Entleerung durch ein Sammelfahrzeug zu reinigen oder aber in größeren Abständen. Das Waschfahrzeug ist komplett so ausgerüstet, dass es mit einer verhältnismäßig kleinen Wassermenge einen ganzen Tag oder auch mehr auskommen kann, weil das Wasser im Kreislauf geführt und dabei jeweils mehrfach gereinigt wird. Die Reinigung des Reinigungswassers bzw. der Reinigungsflüssigkeit erfolgt ohne chemische Zusätze, wobei auch zum Abreinigen der Tonnen und Behälter solche Chemikalien nicht eingesetzt werden. Damit kann sowohl das Grobmaterial wie auch das Feinmaterial, das über Siebe zurückgehalten wird, problemlos entsorgt werden. Dies gilt auch für die Reinigungsflüssigkeit, d. h. für das Wasser, wobei der notwendige Reinigungseffekt deshalb auch ohne chemische Zusätze erzielt werden kann, weil die Reinigungsflüssigkeit bzw. das Wasser auf Hochdruck gebracht wird, sodass das eingedüste bzw. eingesprühte Wasser für den notwendigen Reinigungserfolg immer sorgt. Ein derartiges Waschfahrzeug würde aber nicht nur unbefriedigend arbeiten, sondern auch gleichzeitig noch ergonomisch unbefriedigend, wenn nicht eine Hebe-Schwenk- und Senkeinrichtung geschaffen wäre, mit der das Aufnehmen auch unterschiedlich ausgebildeter bzw. aus unterschiedlichen Werkstoffen hergestellter Tonnen und Behälter möglich wäre. Dies erreicht die Erfindung durch Sauggreifer, die darüber hinaus mit einem Anforderungskontakt ausgerüstet sind, der ein mm genaues Heranschieben der Behälter und Tonnen nicht erforderlich macht. Vielmehr müssen die entsprechenden Behälter lediglich soweit herangeschoben werden, dass der entsprechende Anforderungskontakt anspricht, der dann den Sauggreifer initiiert bzw. dafür sorgt, dass die Vakuumpumpe anspringt. Der entsprechende Anforderungskontakt in Form eines geschützt angeordneten Näherungsschalters wird dabei durch eine Metallplatte initiiert, die unabhängig vom Material des Behälters immer für das sichere Ansprechen Sorge trägt.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Fig. 1: ein Waschfahrzeug in Seitenansicht,
- Fig. 2: ein Waschfahrzeug in Teilrückansicht mit Feststoffbehältern und Seitenheber,
- Fig. 3: eine Heckansicht des Waschfahrzeuges,
- Fig. 4: den Hydraulikplan des Waschfahrzeuges,
- Fig. 5: den Schaltplan für das Vakuumsystem und
- Fig. 6: eine Teilansicht des Sauggreifers mit Anforderungskontakt.

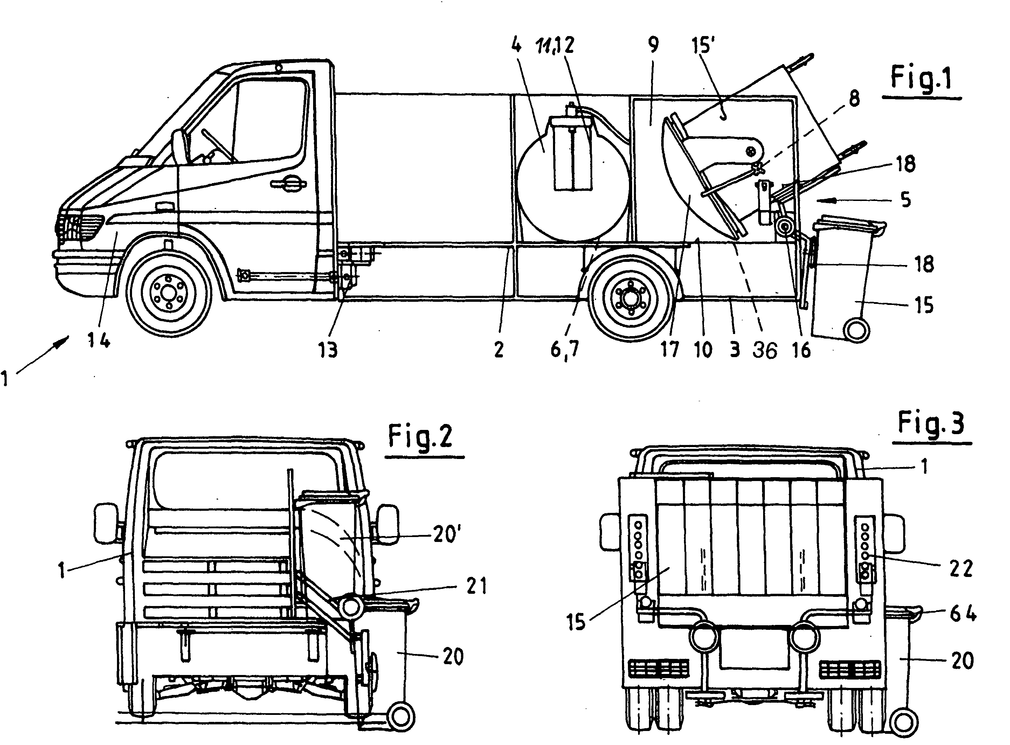

Für das Reinigen insbesondere von Bio-Tonnen ist das in Fig. 1 gezeigte Waschfahrzeug 1 vorgesehen. Es handelt sich um einen Klein-LKW, dessen Ladefläche 2 so umgerüstet ist, dass alle für das Abreinigen von Bio-Tonnen 15 benötigten Installationen untergebracht werden können. Das Fahrgestell 3 braucht hierzu nicht einmal verstärkt zu werden.

Erkennbar ist in Fig. 1 die mittige Anordnung des Wasserbehälters 4, in dem das für das Abreinigen benötigte Wasser bzw. die Reinigungsflüssigkeit vorgehalten wird. Dieses Wasser wird im Kreislauf geführt, wie weiter hinten noch erläutert wird.

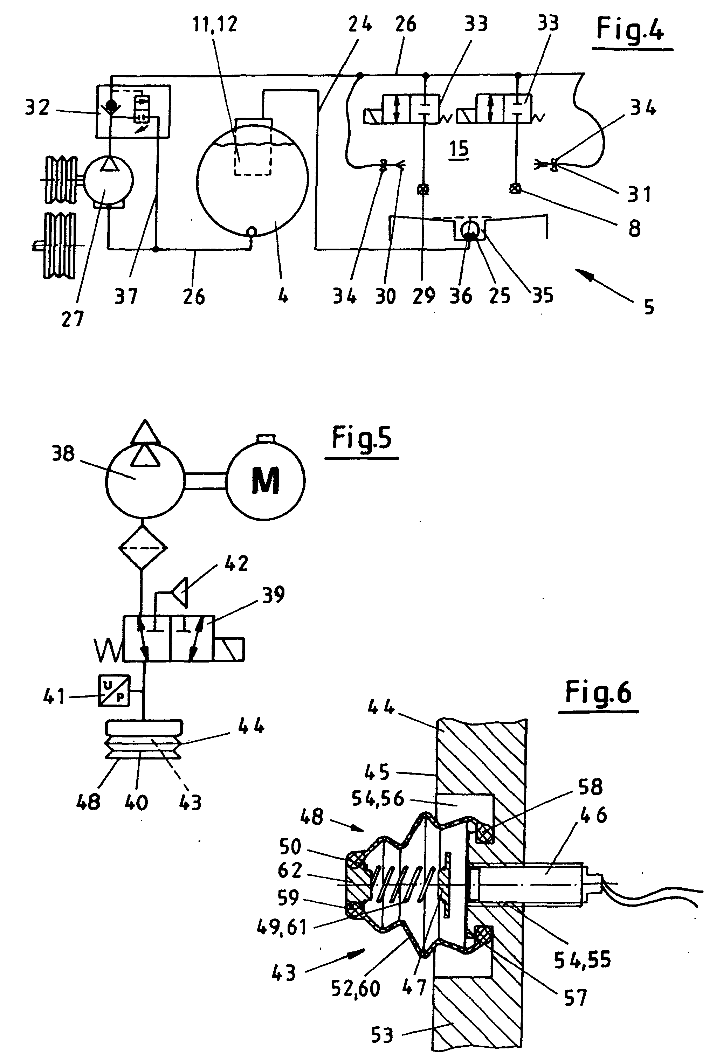

Von der Reinigungsanlage 5 sind in Fig. 1 eigentlich nur die Sprühlanzen 8 zu erkennen, über die die in den Auffangraum 9 hereingeschwenkten Bio-Tonnen 15 innenseitig abgereinigt werden. In der nur angedeuteten Auffangwanne 10 ist ein erster als Grobsieb ausgebildeter Schmutzabscheider 36 angeordnet, während der zweite Schmutzabscheider 11 in Form des Feinfilters 12 hier dem Wasserbehälter 4 zugeordnet ist. Über eine hier nur angedeutete Pumpe 6 mit Antrieb 7 wird das den Grobsieb 36 passierende und in der Auffangwanne 10 aufgefangene Schmutzwasser dem Wasserbehälter 4 zugerührt. Eine zweite Pumpe sorgt dann dafür, dass das den Wasserbehälter 4 verlassende gereinigte Wasser zu den Sprühlanzen 8 gedrückt werden kann. Der Antrieb der hierzu dienenden und in Fig. 4 gezeigten Hochdruckpumpe 27 erfolgt über einen Nebenantrieb 13 und damit über den Fahrmotor 14. Eine sehr günstige Antriebsweise ist so erreicht.

Fig. 5 ist weiter noch zu entnehmen, dass die einzelnen Bio-Tonnen 15 über eine Hebe-Schwenk- und Senkeinrichtung 16 hochgeschwenkt werden, wobei dieser Hebe-Schwenk- und Senkeinrichtung 16 ein Sauggreifer 18 zugeordnet ist, der für ein sichers Ergreifen und Anheben der Bio-Tonnen 15 Sorge trägt und zwar unabhängig von der Art. In Fig. 1 ist daher sowohl eine kleine Bio-Tonne 15 wie eine große Bio-Tonne 15' angedeutet. Der Deckel 17 dieser Bio-Tonnen 15, 15' wird beim Hochschwenken in den Auffangraum 9 gleichzeitig geöffnet, sodass dann die Sprühlanzen 8 in den Innenraum hineinreichen können.

Fig. 2 zeigt eine Besonderheit des Waschfahrzeugs 1, dem nämlich zur Aufnahme des im ersten Schmutzabscheider 36 aufgefangenen Grobmaterials gesonderte Feststoffbehälter 20 zugeordnet sind. Diese Feststoffbehälter 20 werden mit einem Seitenheber 21 seitlich hochgeschwenkt und auf der Ladefläche 2 abgesetzt. Der Feststoffbehälter 20 wird dann über den Seitenheber 21 wieder in die obere Position angehoben.

Fig. 3 zeigt das Waschfahrzeug 1 vom Heck her, wobei die dort angeordnete Steuertafel 22 erkennbar ist. Von hier aus können die Müllwerker entweder die hier dargestellte große Bio-Tonne 15' oder aber auch kleine Bio-Tonnen 15 aufnehmen, je nach dem welche gerade beim jeweiligen Verbraucher vorgefunden wird.

Schematisch wiedergegeben ist in Fig. 4 der Verlauf der Wasserleitungen und die Anordnung der Einzelteile der Reinigungsanlage 5. Erkennbar ist zunächst einmal der etwa mittig des Fahrgestells 3 angeordnete Wasserbehälter 4, aus dem das gereinigte Wasser über die Versorgungsleitung 26 zunächst der Hochdruckpumpe 27 zugeführt wird, um dann unter Passieren des Unloader Ventils 32 zu den Sprühlanzen 8, 29 geführt zu werden. Die Sprühlanzen 8, 29 tragen das Wasser in der Bio-Tonne 15 aus, worauf es dann in die Auffangwanne 10 zurückströmt und hier nach Passieren des als Grobsieb 36 ausgebildeten ersten Schmutzabscheiders in den Pumpensumpf 35 zu gelangen. Im Pumpensumpf 35 ist die Tauchpumpe 25 angeordnet, die das von den groben Bestandteilen gereinigte Schmutzwasser über die Versorgungsleitung 24 in den Wasserbehälter 4 zurückdrückt. Das Grobsieb 36 kann leicht gereinigt werden, wie Fig. 4 andeutet.

In oder am Wasserbehälter 4 ist ein Feinfilter 12 vorgesehen, der auch den feinen Schmutz zurückhält, sodass nur entsprechend sauberes Wasser in den Wasserbehälter 4 zurückströmt. Auch dieser Feinfilter 12 kann leicht gesäubert werden, weil er einen Einsatzkörper bildet, der aus Edelstahldrahtgewebe besteht, sodass eine leichte Abreinigung und ein mehrfacher Einsatz sichergestellt sind.

Den Sprühlanzen 8, 29 sind Handpistolen 30, 31 zugeordnet, die über einfache Schaltvenitle 34 von Hand ein- und ausgeschaltet werden können und dazu dienen, die Bio-Tonnen 15 von außen abzusäubern oder hartnäckigen Schmut von innen, wenn dies erforderlich ist. Den Sprühlanzen 8, 29 sind Wegeventile 33 vorgeordnet, über die ein automatischer Betriebsablauf möglich wird. Die Wegeventile 33 werden über die Steuerung 22 GPS angesprochen und sind so ausgebildet oder können so ausgebildet werden, dass nach einem vorgegebenen Zeitraum automatisch eine Abschaltung erfolgen kann.

Um ein häufiges Hochfahren der Hochdruckpumpe 27 zu vermeiden, ist dieser das Unloader Ventil 32 zugeordnet. Erkennbar ist in Fig. 4, dass bei Bedarf das Hochdruckwasser im Kreis geführt werden kann, wozu die Leitung 37 dient. Bei der in Fig. 4 wiedergegebenen Stellung werden sowohl die Sprühlanzen 8, 29 wie auch die Handpistolen 30, 31 mit Hochdruckwasser versorgt. Erst bei Umschalten des Unloader Ventils 32, dann nämlich wenn das integrierte Rückschlagventil anspricht, wird das Wasser im Kreislauf über die Leitung 37 geführt.

Neben der besonderen und geschickten Ausbildung des Wasserkreislaufes bzw. der entsprechenden Ausbildung der Reinigungsanlage 5 ist anhand der Figuren 5 und 6 erläutert, wie der weiter vorn erwähnte Sauggreifer 18 arbeitet. Der Sauggreifer 18 ist mit einem Saugkörper 40 ausgerüstet, vorzugsweise einem Mehrfaltenbalg 44. Entsprechendes zeigt Fig. 6. Dieser Mehrfaltenbalg 44 legt sich mit der Balgaußenwand 48 an einen hier nicht gezeigten Behälter bzw. eine Bio-Tonne 15 an, wobei ein hier nicht näher erwähnter und erläuterter Anforderungskontakt 43 dann dafür sorgt, dass die Vakuumpumpe 38 eingeschaltet wird. Diese Vakuumpumpe 38 sorgt für eine entsprechendes Vakuum im Mehrfaltenbalg 44 bzw. im Saugkörper 40. Das Ventil 39 ist nach Fig. 5 auf Saugen gestellt.

Während des Hochschwenkens und des Abreinigens der Bio-Tonne 15 sorgt der Druckschalter 41 dafür, dass innerhalb des Saugkörpers 40 bzw. des Mehrfaltenbalges 44 ein ausreichender Unterdruck ansteht, sodass ein Festhalten der Bio-Tonne 15 gesichert ist. Mit Betätigen des Ventils 39 kann nun wieder Luft in den Mehrfaltenbalg 44 einströmen und der Kontakt mit der Bio-Tonne 15 wird aufgehoben. Über eine Zuluftöffnung 42 kann dieser Vorgang beschleunigt werden. Die Luft kann dann auf kürzestem Wege in den Mehrfaltenbalg 44 einströmen, sodass sich die Bio-Tonne 15 ablöst.

Im Balgtiefsten 45 ist gemäß Fig. 6 der schon erwähnte Anforderungskontakt 43 angeordnet. Dabei handelt es sich bei der hier gezeigten Ausführung um einen Näherungsschalter 46, der über eine Metallplatte 47 angesprochen wird. Über diese Metallplatte 47 kann bei einem relativ großen Abstand zwischen der Bio-Tonne 15 und dem Näherungsschalter 46 bereits der Kontakt ausgelöst und die Vakuumpumpe 38 in Gang gebracht werden. Die Metallplatte 47 ist hierzu über einen Abstandshalter 49 in Form der Druckfeder 61 im Ruhezustand in dem in Fig. 6 gezeigten großen Abstand gehalten. Wird nun die Bio-Tonne 15 gegen die Stützplatte 62 und damit die Druckfeder 61 geschoben, so bewegt sich die Metallplatte 47 auf den Näherungsschalter 46 zu, bis dieser anspricht. Die Metallplatte 47 kann dabei nicht direkt auf den Näherungsschalter 46 sich auflegen, weil dieser einen entsprechend wahrend in der Innenbohrung 55 angeordnet ist. Diese Innenbohrung 55 ist Teil einer Stufenbohrung 54 in der Basis 53 des Mehrfaltenbalges 44.

Während der Näherungsschalter 46 in der Innenbohrung 55 fixiert ist, dient die Großbohrung 56 der Stufenbohrung 54 zur Festlegung des Schutzmantels 52 des Anforderungskontaktes 43. Der Schutzmantel 52 ebenfalls in Form eines Faltenbalges 60 erleichtert eine Montage der einzelnen Bauteile, weil er mit seinen Ringwulsten 58 am Flansch 57 und mit der Ringwulst 59 an der Stützplatte 62 leicht festgelegt werden kann. Erkennbar ist, dass damit sowohl für die Druckfeder 61 wie auch für die Metallplatte 47 und den Näherungsschalter 46 eine wasserdichte Anordnung innerhalb des Faltenbalges 60 geschaffen ist.

Ist die Bio-Tonne 15 gesäubert und abgesenkt und der Mehrfaltenbalg 44 wieder mit der Atmosphäre verbunden, so wird die am gegenüberliegenden Ende 50 der Basis 53 angeordnete Stützplatte 46 über die Druckfeder 61 vom Näherungsschalter 46 abgestoßen und schließlich vom Faltenbalg 60 in die aus Fig. 6 ersichtliche Ausgangsposition zurückbewegt. Der Anforderungskontakt 43 steht dann für einen neuen Kontakt mit einer Bio-Tonne 15 zur Verfügung.

Mit 64 ist übrigens der Verschlussdeckel der Feststoffbehälter 20 bezeichnet.

## Patentansprüche

1. Waschfahrzeug (1) für Abfallsammelbehälter, insbesondere Bio-Tonnen (15), der mit einem Wasserbehälter (4) mit vorgeordnetem Schmutzabscheider (11), einem Auffangraum (9) mit Auffangwanne (10) für das Schmutzwasser und einer die Bio-Tonnen (15) in den Auffangraum (9) schwenkende Hebe-Schwenk- und Senkeinrichtung (16) ausgerüstet ist, wobei im Auffangraum (9) eine Reinigungsanlage (5) mit Sprühlanzen (8) angeordnet ist, die Auffangwanne (10) ein vorgeordnetes Grobsieb (36) und eine als Tauchpumpe ausgebildete und über eine Versorgungsleitung (24) mit dem Wasserbehälter (4) verbundene Schmutzwasserpumpe (25) aufweist und dem Wasserbehälter (4) ein Filter (11.12) vor- und eine als Hochdruckpumpe ausgebildete und die Sprühlanzen (8) versorgende Pumpe (27) zugeordnet ist,
**dadurch gekennzeichnet,**
**dass** der Schmutzabscheider (11,12) als ein Edelstahldrahtgewebe aufweisender Feinfilter (12) und im Wasserbehälter (4) anzuordnender Einsatzkörper ausgebildet ist, und dass die Hebe-Schwenk- und Senkeinrichtung (16) mit einem Sauggreifer (18) ausgerüstet ist, der an eine Vakuumpumpe (38) angeschlossen ist.

2. Waschfahrzeug nach Anspruch 1,
**dadurch gekennzeichnet,**
**dass** die Hochdruckpumpe (27) über einen Nebenantrieb (13) des Fahrmotors (14) antreibbar und ihr ein Unloader Ventil (32) nachgeordnet ist.

3. Waschfahrzeug nach einem der vorhergehenden Ansprüche,
**dadurch gekennzeichnet,**
**dass** zwei automatische Sprühlanzen (8, 29) und ein oder zwei Handpistolen (30, 31) vorgesehen sind, die alle unabhängig voneinander mit der Versorgungsleitung (26) hinter dem Wasserbehälter (4) verbunden und schaltbar ausgebildet sind.

4. Waschfahrzeug nach einem der vorhergehenden Ansprüche,
**dadurch gekennzeichnet,**
**dass** die Handpistolen (30, 31) je eine Düse aufweisen und manuell schaltbar ausgebildet sind.

5. Waschfahrzeug nach einem der vorhergehenden Ansprüche,
**dadurch gekennzeichnet,**
**dass** die Sprühlanzen (8, 29) mit je vier Düsen ausgerüstet sind, die kranzförmig angeordnet und über Wegeventile (33) automatisch schaltbar sind.

6. Waschfahrzeug nach einem der vorhergehenden Ansprüche,
**dadurch gekennzeichnet,**
**dass** der an eine elektrisch betriebene Vakuumpumpe (38) angeschlossene Sauggreifer (18) einen zwischen Ventil (39) und Saugkörper (40) des Sauggreifers (18) angeordneten und den Saugkörper (40) überwachender und das Saugventil (39) ggf. betätigenden Druckschalter (41) aufweist.

7. Waschfahrzeug nach einem der vorhergehenden Ansprüche,
**dadurch gekennzeichnet,**
**dass** der Sauggreifer (18) mit einem Anforderungskontakt (43) ausgerüstet ist, über den die Vakuumpumpe (38) und das Ventil (39) schaltbar ausgeführt sind.

8. Waschfahrzeug nach einem der vorhergehenden Ansprüche,
**dadurch gekennzeichnet,**
**dass** der Sauggreifer (18) mit einem tonnenseitig offenen Mehrfaltenbalg (44) versehen ist, in dessen Balgtiefsten (45) ein als Näherungsschalter (46) ausgerüsteter Anforderungskontakt (43) positioniert ist.

9. Waschfahrzeug nach Anspruch 8,
**dadurch gekennzeichnet,**
**dass** dem Näherungsschalter (46) eine Metallplatte (47) in Richtung Balgaußenwand (48) vorgeordnet ist, die im Ruhezustand über einen Abstandshalter (49) im ansprechfreien Abstand zum Näherungsschalter (46) gehalten ist.

10. Waschfahrzeug nach Anspruch 9,
**dadurch gekennzeichnet,**
**dass** der Abstandshalter (49) als Druckfeder ausgebildet ist, die am der Metallplatte (47) gegenüberliegenden Ende (50) an einem, den Anforderungskontakt (43) umschließenden und abdichtenden Schutzmantel (52) lösbar angeordnet ist.

11. Waschfahrzeug nach Anspruch 10,
**dadurch gekennzeichnet,**
**dass** der Schutzmantel (52) ebenfalls ein Faltenbalg (60) ist, der an der Basis (53) des Mehrfaltenbalges (44) lösbar befestigt ist.

12. Waschfahrzeug nach einem der vorhergehenden Ansprüche,
**dadurch gekennzeichnet,**
**dass** in der Basis (53) des Mehrfaltenbalges (44) eine Stufenbohrung (54) für den Näherungsschalter (46) vorgesehen ist, wobei die Innenbohrung (55) einen in die Großbohrung (56) vorspringenden Flansch (57) aufweist, hinter den der Schutzmantel (52) einspannbar ausgebildet ist.

13. Waschfahrzeug nach Anspruch 12,
**dadurch gekennzeichnet,**
**dass** der Näherungsschalter (46) geringfügig zurückversetzt in der Innenbohrung (55) angeordnet ist.

14. Waschfahrzeug nach einem oder mehreren der vorhergehenden Ansprüche,
**dadurch gekennzeichnet,**
**dass** der als Schutzmantel (52) dienende Faltenbalg an beiden Enden eine Ringwulst (58, 59) aufweisend ausgebildet ist, wobei das der Metallplatte (47) gegenüberliegende Ende (50) eine mit einer die Druckfeder (61) aufnehmenden Stützplatte (62) korrespondierend geformt ist.

15. Waschfahrzeug nach einem der vorhergehenden Ansprüche,
**dadurch gekennzeichnet,**
**dass** seitlich am Fahrgestell (3) Feststoffbehälter (20) für die abgesonderten Feststoffe lösbar anmontiert und mit schwenkbarem Verschlussdeckel (64) ausgerüstet sind.

## Claims

1. A washing vehicle (1) for refuse collection containers, in particular recycling bins (15), which is equipped with a water reservoir (4) having a dirt separator (11) disposed in front of it, a collection chamber (9) with collection tank (10) for the dirty water and a lifting, swivelling and lowering device (16) that swivels the recycling bins (15) into the collection chamber (9), wherein a cleaning unit (5) with spray lances (8) is disposed in the collection chamber (9), the collection tank (10) has a coarse screen (36) disposed in front of it and a dirty water pump (25) constructed as a submersible pump and connected to the water reservoir (4) via a supply line (24) and a filter (11.12) is connected in front of the water tank (4) and a pump (27) constructed as a high-pressure pump and supplying the spray lances (8) is associated with said water tank,
**characterised in that** the dirt separator (11, 12) is constructed as a fine filter (12) having a special steel wire cloth and an insertion member to be disposed in the water reservoir (4),
and **in that** the lifting, swivelling and lowering device (16) is equipped with a suction gripper (18) which is connected to a vacuum pump (38).

2. A washing vehicle according to Claim 1,
**characterised in that** the high-pressure pump (27) can be driven via an auxiliary drive (13) of the traction motor (13) and an unloader valve (32) is provided after it.

3. A washing vehicle according to one of the preceding Claims,
**characterised in that** two automatic spray lances (8, 29) and one or two hand guns (30, 31) are provided, which are all connected independently of one another to the supply line (26) behind the water reservoir (4) and have a switchable design.

4. A washing vehicle according to one of the preceding Claims,
**characterised in that** the hand guns (30, 31) each have a nozzle and are constructed so that they can be manually switched.

5. A washing vehicle according to one of the preceding Claims,
**characterised in that** the spray lances (8, 29) are each equipped with four nozzles which are disposed in a ring and can be automatically switched via directional control valves (33).

6. A washing vehicle according to one of the preceding Claims,
**characterised in that** the suction gripper (18) connected to an electrically operated vacuum pump (38) comprises a push-button switch (41) disposed between valve (39) and suction member (40) of the suction gripper (18) and monitoring the suction member (40) and where appropriate operating the suction valve (39).

7. A washing vehicle according to one of the preceding Claims,
**characterised in that** the suction gripper (18) is equipped with a request contact (43), via which the vacuum pump (38) and the valve (39) are switchably designed.

8. A washing vehicle according to one of the preceding Claims,
**characterised in that** the suction gripper (18) is provided with multi-bellows (44) open on the side of the bin, in the bottom (45) of which a request contact (43) equipped as a proximity switch (46) is positioned.

9. A washing vehicle according to Claim 8,
**characterised in that** disposed in front of the proximity switch (46) is a metal plate (47) in the direction of the outer wall of the bellows (48), which in the quiescent state is held via a spacer (49) in reaction-free distance from the proximity switch (46).

10. A washing vehicle according to Claim 9,
**characterised in that** the spacer (49) is constructed as a compression spring, which at the end (50) opposite the metal plate (47) is detachably disposed on a protective jacket (52) that encloses and seals the request contact (43).

11. A washing vehicle according to Claim 10,
**characterised in that** the protective jacket (52) is also a bellows (60) which is detachably fixed to the base (53) of the multi-bellows (44).

12. A washing vehicle according to one of the preceding Claims,
**characterised in that** a step bore (54) for the proximity switch (46) is provided in the base (53) of the multi-bellows (44), the inner bore (55) having a flange (57) protruding into the large bore (56), behind which the protective jacket (52) is clampably constructed.

13. A washing vehicle according to Claim 12,
**characterised in that** the proximity switch (46) is disposed slightly set back in the inner bore (55).

14. A washing vehicle according to one or more of the preceding Claims,
**characterised in that** the bellows serving as the protective jacket (52) is constructed having an annular ring at both ends, the end (50) opposite the metal plate (47) being formed to correspond with a support plate (62) housing the compression spring (61).

15. A washing vehicle according to one of the preceding Claims,
**characterised in that** solids containers (20) for the separated solids are detachably mounted on the side of the chassis (3) and are equipped with swivelling covers (64).

## Revendications

1. Véhicule de lavage (1) pour des poubelles, notamment des poubelles bio (15), qui est équipé d'un réservoir d'eau (4), en amont duquel est installé un séparateur de saletés (11), une chambre de collecte (9) comportant une cuve de collecte (10) pour l'eau chargée de saletés, et d'un dispositif (16) de soulèvement-basculement et abaissement, qui fait pivoter la poubelle bio (15) dans l'espace de collecte (9), dans lequel une installation de nettoyage (5) comportant des lances de pulvérisation (8) est disposée dans la chambre de collecte (9), la cuve de collecte (10) comporte un tamis grossier (36) installé en amont et une pompe (25) d'entraînement de l'eau contenant des saletés, qui est réalisée sous la forme d'une pompe submersible et est reliée par l'intermédiaire d'une canalisation d'alimentation (24) au réservoir d'eau (4), et un filtre (11, 12) est disposé en amont du réservoir d'eau (4) et une pompe (27), qui est réalisée sous la forme d'une pompe à haute pression et alimente les lances de pulvérisation (8), est associée au réservoir d'eau (4), **caractérisé en ce**
**que** le séparateur de saletés (11, 12) est agencé sous la forme d'un filtre fin (12) comportant un tissu de fils en acier spécial et d'un corps formant insert devant être disposé dans le réservoir d'eau (4) et en ce que le dispositif de soulèvement-pivotement et abaissement (16) est équipé d'un organe de prélèvement à aspiration (18) qui est raccordé à une pompe à vide (38).

2. Véhicule de lavage selon la revendication 1, **caractérisé en ce**
**que** la pompe à haute pression (27) peut être entraînée par l'intermédiaire d'un dispositif d'entraînement auxiliaire (13) du moteur (14) d'entraînement du véhicule et en ce qu'une soupape de déchargement (32) est disposée en aval de cette pompe.

3. Véhicule de lavage selon l'une des revendications précédentes, **caractérisé en ce**
**qu'**il est prévu deux lances automatiques de pulvérisation (8, 29) et un ou deux pistolets manuels (30, 31), qui sont tous reliés, indépendamment les uns des autres, à la canalisation d'alimentation (26) en aval du réservoir d'eau (4) et sont agencés de manière à être commutables.

4. Véhicule de lavage selon l'une des revendications précédentes, **caractérisé en ce**
**que** les pistolets manuels (30, 31) comportent chacun une buse et sont agencés de manière à être commutables manuellement.

5. Véhicule de lavage selon l'une des revendications précédentes, **caractérisé en ce**
**que** les lances de pulvérisation (8, 29) sont équipées chacune de quatre buses, qui sont disposées sous la forme d'une couronne et peuvent être commutées automatiquement au moyen de soupapes droites (33).

6. Véhicule de lavage selon l'une des revendications précédentes, **caractérisé en ce**
**que** l'organe de préhension à aspiration (18), qui est raccordé à une pompe à vie entraînée électriquement (38), comporte un interrupteur de pression (41), qui est disposé entre la soupape (39) et le corps d'aspiration (40) de l'organe de préhension à aspiration (18), contrôle le corps d'aspiration (40) et actionne éventuellement la soupape d'aspiration (39).

7. Véhicule de lavage selon l'une des revendications précédentes, **caractérisé en ce**
**que** l'organe de prélèvement à aspiration (18) est équipé d'un contact de demande (43), au moyen duquel la pompe à vide (38) et la soupape (39) sont commutables.

8. Véhicule de lavage selon l'une des revendications précédentes, **caractérisé en ce**
**que** l'organe de préhension à aspiration (18) est équipé d'un soufflet multiple (44) ouvert du côté de la poubelle et dans la partie la plus profonde (45) duquel est positionné un contact de sollicitation (43) équipé d'un interrupteur de proximité (46).

9. Véhicule de lavage selon la revendication 8, caractérisé
qu'en amont de l'interrupteur de proximité (46) est disposée, en direction de la paroi extérieure (48) du soufflet, une plaque métallique (47) qui, à l'état de repos, est retenue au moyen d'un moyen d'écartement (49) à une distance, n'entraînant aucune réponse de l'interrupteur de proximité (46).

10. Véhicule de lavage selon la revendication 9, **caractérisé en ce**
**que** le moyen d'écartement (49) est agencé sous la forme d'un ressort de pression, qui est disposé de façon amovible, au niveau de l'extrémité (50) située à l'opposé de la plaque métallique (47), sur une enveloppe de protection (52) qui entoure et étanchéifie le contact de sollicitation (43).

11. Véhicule de lavage selon la revendication 10, **caractérisé en ce**
**que** l'enveloppe de protection (52) est également un soufflet (60), qui est fixé de façon amovible sur la base (53) du soufflet multiple (44).

12. Véhicule de lavage selon l'une des revendications précédentes, **caractérisé en ce**
**qu'**un perçage étagé (55) pour l'interrupteur de proximité (46) est prévu dans la base (53) du soufflet multiple (44), le perçage intérieur (55) comportant une bride (57), qui fait saillie dans le perçage de grande taille (56) et en arrière de laquelle l'enveloppe de protection (52) peut être serrée.

13. Véhicule de lavage selon la revendication 12, **caractérisé en ce**
**que** l'interrupteur de proximité (46) est disposé en étant légèrement décalé en retrait dans le perçage intérieur (55).

14. Véhicule de lavage selon une ou plusieurs des revendications précédentes, **caractérisé en ce**
**que** le soufflet, utilisé comme enveloppe de protection (52) est agencé de manière à comporter un rebord annulaire (58, 59) au niveau des deux extrémités, l'extrémité (50) située à l'opposé de la plaque métallique (47) étant conformée d'une manière qui correspond à une plaque d'appui (62) qui reçoit le ressort de pression (61).

15. Véhicule de lavage selon l'une des revendications précédentes, **caractérisé en ce**
**que** des récipients (20) pour les substances solides séparées sont montées de façon amovible latéralement sur le châssis (3) du véhicule et sont équipés d'un couvercle de fermeture pivotant (64).
